# EUROPÄISCHE PATENTSCHRIFT

(11) **EP 4 155 055 B1**
(45) Veröffentlichungstag und Bekanntmachung des Hinweises auf die Patenterteilung: **14.08.2024**
(21) Anmeldenummer: 22190663.9
(22) Anmeldetag: 16.08.2022
(51) Int. Cl.: B29C 49/78, B29C 49/06, B29C 49/42, B29C 49/36, B29K 67/00, B29L 31/00

(54) **VORRICHTUNG UND VERFAHREN ZUM UMFORMEN VON KUNSTSTOFFVORFORMLINGEN MIT GESTEUERTER VENTILEINRICHTUNG**
METHOD AND DEVICE FOR REFORMING PLASTIC PRE-FORMS WITH COLTROLLED VALVE DEVICE
DISPOSITIF ET PROCÉDÉ DE FORMAGE DES PRÉFORMES EN MATIÈRE PLASTIQUE POURVU DE DISPOSITIF SOUPAPE COMMANDÉE

(30) Priorität: 28.09.2021 DE 102021125052
(43) Veröffentlichungstag der Anmeldung: 29.03.2023
(73) Patentinhaber: Krones AG, 93073 Neutraubling (DE)
(72) Erfinder: Brunner, Andreas, 93073 Neutraubling (DE); Hoellriegl, Thomas, 93073 Neutraubling (DE)
(74) Vertreter: Hannke Bittner & Partner mbB Regensburg

(56) Entgegenhaltungen:
- EP-A1- 3 169 506
- DE-A1- 10 240 252
- DE-A1- 102010 025 745
- DE-B3- 102004 041 973

## Beschreibung

Die vorliegende Erfindung bezieht sich auf ein Verfahren und eine Vorrichtung zum Umformen von Kunststoffvorformlingen zu Kunststoffbehältnissen. In der getränkeherstellenden Industrie ist es seit langem bekannt, dass Kunststoffvorformlinge zunächst erwärmt und anschließend durch Beaufschlagung mit Druckluft zu Kunststoffbehältnissen, wie beispielsweise Kunststoffflaschen umgeformt werden. Solche Verfahren und Vorrichtungen sind beispielsweise in den Patentschriften DE102004041973B3, DE102010025745A1, DE10240252A1 beschrieben.

Dabei werden unterschiedliche Rezepte zum Herstellen der Kunststoffflaschen verwendet. Beim Erstellen eines Flaschenrezepts werden die Drücke, insbesondere Blasdrücke an einer Bedieneinheit, wie etwa einem Touchscreen eingestellt. Die Maschinensteuerung übersetzt diese Parameter in elektrische Sollwerte (4-20 mA) und leitet diese an die entsprechenden Ventile weiter. Das Ventil übersetzt das elektrische Signal in einen pneumatischen Druck, den Steuerdruck für einen Domdruckregler.

Der Domdruckregler regelt den Primärdruck, zum Beispiel 35 bar auf einen Sekundärdruck zum Beispiel 25 bar herunter und speist diesen in einen Ringkanal. Dieser Ringkanal ist wiederum mit den Ventilblöcken an jeder Umformungsstation verbunden.

Wird Druckluft zum Blasen der Flasche benötigt, öffnet der Ventilblock die jeweiligen Blasventile und Luft strömt aus dem Ringkanal in die Behältnisse. Dabei senkt sich der Druck in dem Ringkanal, auf Grund der Entnahme ab oder bricht kurz ein bevor der Domdruckregler wieder den Druck angleichen kann oder darauf reagiert.

Durch die Vielzahl der beteiligten Komponenten entsteht eine Regeltoleranz, d. h. eine Abweichung von Soll- und Ist-Druck. Diese kann je nach technischem Zustand des Ventils und des Domdruckreglers bis zu 4 bar betragen. Des Weiteren entstehen durch unterschiedliche Luftbedarfe unterschiedlich große Abweichungen in einem Druckluftreservoir, beispielsweise in dem Ringkanal.

Fabrikneue Ventile weisen zum Beispiel durch eine höhere innere Reibung, größere Regeltoleranzen und Reaktionszeiten auf als "eingelaufene" Ventile. Die Regeltoleranz der Domdruckregler variiert stark mit der Höhe des Sollwerts. Bei einem geringen Sollwert zum Beispiel 5 bar ist die Abweichung wesentlich höher als bei einem Sollwert von 30 bar.

Zudem werden das Ventil bzw. der Domdruckregler nicht aktiv nachgeregelt. Bei einem kurzen starken Luftbedarf bricht der Druck kurzzeitig stärker ein bevor der Druckregler darauf reagiert und den Druck wieder nachgeregelt. Auch bei Störeinflüssen wie zum Beispiel Flaschenplatzern schwankt das Druckniveau stärker und wirkt sich auf die Qualität der geblasenen Flaschen (wegen der Materialverteilung) stärker aus. Die Materialverteilung des Behälters wird primär über den Druckanstieg in Behälter zur Bewegung der Reckstange bestimmt, somit variiert auch diese stark bei Schwankungen des Druckes.

Der vorliegenden Erfindung liegt daher die Aufgabe zugrunde, derartige Regeltoleranzen auszugleichen, bzw. diesen vorzubeugen. Dies wird erfindungsgemäß durch die Gegenstände der unabhängigen Patentansprüche erreicht. Vorteilhafte Ausführungsformen und Weiterbildungen sind Gegenstand der Unteransprüche.

Bei einem erfindungsgemäßen Verfahren zum Umformen von Kunststoffvorformlingen zu Kunststoffbehältnissen werden die Kunststoffvorformlinge entlang eines vorgegebenen Transportpfads transportiert und während dieses Transports mit einem fließfähigen Medium und insbesondere einem gasförmigen Medium (und insbesondere Druckluft) beaufschlagt und auf diese Weise expandiert, wobei ein steuerbares Ventil (und insbesondere ein steuerbares Ventil einer Reduzierstation) die Beaufschlagung eines Druckluftreservoirs, insbesondere eines Ringkanals, mit dem fließfähigen Medium steuert und wobei ein Soll-Druck vorgegeben wird, mit dem das Druckluftreservoir beaufschlagt wird, wobei dieser Soll-Druck bzw. ein Sollwert dieses Soll-Drucks bei der Steuerung des Ventils berücksichtigt wird.

Erfindungsgemäß wird ein Ist-Druck ermittelt und dieser Ist-Druck wird mit dem Soll-Druck verglichen und aus diesem Vergleich wird ein Korrekturwert ermittelt und/oder errechnet, der bei der Steuerung des Ventils (der Reduzierstation) berücksichtigt und/oder verwendet wird und/oder das Ventil wird unter Berücksichtigung dieses oder in Abhängigkeit von diesem Ist-Druck(s) gesteuert.

Es wird also vorgeschlagen, dass ein Ist-Druck, insbesondere ein momentaner Ist-Druck, insbesondere ein Ist- Druck innerhalb des Druckreservoirs (insbesondere mit einem Druckaufnehmer) bestimmt wird und mit dem Soll-Druck verglichen wird. Aus diesem Vergleich kann eine entsprechende Steuerung des Ventils abgeleitet werden.

Bevorzugt handelt es sich bei dem fließfähigen Medium um Druckluft. Es wäre jedoch auch die Expansion mit einem flüssigen Medium beispielsweise mit einem abzufüllenden Produkt denkbar.

Bevorzugt ist daher das oben genannte Ventil der Reduzierstation zugeordnet. Das (wenigstens eine) Ventil ist bevorzugt Bestandteil dieser Reduzierstation und steuert diese bevorzugt. Wie oben erwähnt, dient die Reduzierstation dazu, um einen Primärdruck auf einen von der Vorrichtung verwendeten Sekundärdruck zu reduzieren. Dabei ist bevorzugt das besagte Ventil in der Strömungsrichtung des fließfähigen Mediums vor der Reduzierstation angeordnet und/oder es ist ein Bestandteil dieser Reduzierstation. Bevorzugt handelt es sich bei diesem Ventil der Reduzierstation um ein zentrales Ventil, welches keiner bestimmten Umformungsstation zugeordnet ist, sondern die Versorgung des Reservoirs mit Druckluft beeinflusst.

Bei einem bevorzugten Verfahren wird der Ist-Druck kontinuierlich während des Expansionsvorgangs bestimmt. Es wäre jedoch auch denkbar, dass der Ist-Druck zu vorbestimmten Zeitpunkten während des Expansionsprozesses bestimmt wird.

Bei einer weiteren bevorzugten Ausführungsform werden die Behältnisse mittels einer Reckstange in ihrer Längsrichtung gedehnt. Dabei wird diese Reckstange in das Innere der Kunststoffvorformlinge eingeführt. Besonders bevorzugt werden die Kunststoffvorformlinge innerhalb von Blasformen zu den Behältnissen umgeformt.

Bei einem weiteren bevorzugten Verfahren wird das Ventil geregelt. Vorzugsweise weist eine entsprechende Vorrichtung zum Umformen von Kunststoffvorformlinge zu Kunststoffbehältnissen einen bewegbaren und insbesondere einen drehbaren Träger, insbesondere ein sogenanntes Blasrad auf, an dem eine Vielzahl von Umformungsstation angeordnet ist.

Bei einem weiteren vorteilhaften Verfahren wird ein Soll-Druck durch einen Benutzer vorgegeben, beispielsweise über eine Bedieneinrichtung wie etwa ein Touchpad. Es wäre jedoch auch denkbar, dass der Soll-Druck durch eine Maschinensteuerung vorgegeben wird, beispielsweise auf Grundlage eines Flaschenrezeptes, mit welchem die Kunststoffvorformlinge expandiert werden sollen.

Bei einem bevorzugten Verfahren ergibt sich der Korrekturwert aus einer Differenz zwischen dem Ist-Druck und dem Soll-Druck. Auf diese Weise kann die Steuerung des Ventils unter Berücksichtigung dieser Differenz erfolgen. Bevorzugt wird aus diesen Werten bzw. der Differenz ein Offset berechnet, der bei der Steuerung des Ventils berücksichtigt wird. Dabei kann dieser Offset zeitabhängig berechnet werden und auch berücksichtigt werden.

Durch die Differenz des Ist-Drucks (die beispielsweise mittels eines Druckaufnehmers bestimmt wird) und des Sollwerts (der beispielsweise über eine Bedienungseinrichtung bzw. ein Touchpad vorgegeben wird) kann durch eine Steuerungseinrichtung, insbesondere eine elektronische Steuerungseinrichtung ein Offset errechnet werden und/oder aktiv gegengesteuert werden.

Bevorzugt wird dieser Offset mit dem eingegebenen Sollwert an der Bedienungseinrichtung verrechnet und an das Ventil weitergeleitet. Vorteilhaft handelt es sich bei dem Ventil um ein Proportionalventil.

Bei einer anderen bevorzugten Ausführungsform ist der Steuerungseinrichtung bekannt, wann die einzelnen Blasventile der Ventilblöcke an den Umformungsstationen geöffnet und angesteuert werden und damit kann bereits vorzeitig mit einer definierten Zeitdauer und auch einer notwendigen Druckerhöhung in der Reduzierstation (mittels einer entsprechenden Ansteuerung des Ventils der Reduzierstation) gegengesteuert werden.

Bevorzugt sind die genannten Blasventile den einzelnen Umformungsstationen zugeordnet, während das oben genannte Ventil der Reduzierstation zugeordnet ist.

Bei einem bevorzugten Verfahren erfolgt ein Regeln des Proportionalventils und/oder einer Reduzierstation wie eines Domdruckreglers auf den errechneten Sollwert. Auf diese Weise kann in einem Druckluftreservoir wie etwa einem Ringkanal, der gewünschte Soll-Druck gehalten werden.

Eine weitere Möglichkeit ergibt sich dadurch, wenn anstelle oder zusätzlich zu einem Druckaufnehmer in dem Druckluftreservoir wie einem Ringkanal ein Druckaufnehmer in den einzelnen Ventilblöcken zur Bildung des Offsets herangezogen wird. Bei einer anderen Vorgehensweise wird die Zeitdauer und auch die Druckerhöhung über einen Steuerungsregelkreis ermittelt. Dabei ist es wie unten genauer beschrieben möglich, eine KI-Funktion in der Steuerungseinrichtung oder einer übergeordneten Steuerungseinrichtung vorzusehen. Auf diese Weise kann die Ermittlung der nötigen Prozessparameter bereitgestellt oder unterstützt werden.

So wäre es möglich, dass, insbesondere über einen längeren Zeitraum hinweg, die Ist-Drücke aufgenommen und abgespeichert werden. Dabei kann die Aufnahme und Abspeicherung insbesondere mit einer Zuordnung zu der jeweiligen Umformungsstation erfolgen. Weiterhin können diese Druckwerte in Beziehung gesetzt werden mit weiteren Daten, welche sich auf die Ventile beziehen, wie etwa einen Hersteller der Ventile, eine Lebensdauer der Ventile und dergleichen. Durch die Auswertung diese Daten kann beispielsweise für die Zukunft eine Restlebensdauer der Ventile prognostiziert werden.

Auch kann auf Basis einer Vielzahl von aufgenommenen Daten (insbesondere der oben genannten Blasventile, welche den einzelnen Umformungsstationen zugeordnet sind) eine entsprechende Gegenreaktion eingeleitet werden, beispielsweise der Zeitpunkt für ein Öffnen oder Schließen der Blasventile verändert werden. Dieses Daneben können auch wiederum Messwerte wie Solldrücke aufgenommen werden, und auf diese Weise kann, etwa von einer KI ermittelt werden, wie sich eine bestimmte Änderung ausgewirkt hat.

Bei einem weiteren bevorzugten Verfahren werden auch weitere Daten aufgenommen, welche für den Expansionsprozess relevant sind, wie etwa eine Position und Geschwindigkeit einer Reckstange, oder auch eine Position der betreffenden Umformungsstation entlang deren Transportpfad.

Da die oben erwähnten Parameter üblicherweise nur einmal pro Flaschenrezept notwendig sind, kann dies auch außerhalb der Maschinensteuerung ermittelt werden und dann bevorzugt in den Prozessparametern der Maschinensteuerung abgelegt werden. Daneben ist es auch möglich, dass diese Parameter online abgelegt sind, wodurch eine Maschine anhand der Maschinen- und/oder Prozessparameter diese Werte aus einer Datenbank auswählt und/oder ändert. Durch eine Druckmesseinrichtung in einem Ringkanal oder in den Ventilblöcken können sämtliche Abweichungen erkannt werden (auch solche, die nicht regelmäßig auftreten) und auf diese Weise kann sofort gegengesteuert werden und/oder durch einen Regelkreis bestmöglich ausgeglichen werden.

Daneben wäre es auch möglich, als geeignete Gegenmaßnahmen bei zu hohen Druckschwankungen die Schaltzeitpunkte und die Öffnungszeiten der Blasventile zu verändern, um die Schwankungen in der Speichereinrichtung zu minimieren. Eine gleichbleibende Behältnisqualität ist die zu erreichende Folge.

Bei einem weiteren bevorzugten Verfahren kann die Steuerungseinrichtung die Offsetparameter an eine Speichereinrichtung weiterleiten. So könnte eine Onlineanbindung an eine vordefinierte Cloud und/oder Onlineseite und/oder ein System bestehen, über welche(s) diese Daten weitergeleitet werden. Auf diese Weise können Parameter über den gesamten Lebenszyklus und auch übergreifend kontrolliert, überwacht und ausgewertet werden. Somit ist es möglich, Rezepte eines Behälters (Flasche) von mehreren Maschinen und Produktionsstandorten weltweit miteinander in Bezug auf Behälterqualität, Energieverbrauch, Ausstoßleistung usw. zu vergleich und zu optimieren.

Bei einem bevorzugten Verfahren werden Grenzwerte (etwa für den Soll-Druck) definiert. Bei einem Überschreiten dieser vordefinierten Grenzwerte kann eine Rückmeldung an den Maschinenbediener gegeben werden. Daneben können auch automatisch benötigte Ersatzteile bestellt werden und eine geplante Instandhaltung angefordert werden. Auch kann eine Meldung an ein Liniendiagnosesystem an einem Leitstand gesendet werden. Daneben ist es auch denkbar, als geeignete Gegenmaßnahmen die Schaltzeitpunkte und die Öffnungszeiten der der Blasventile zu verändern, um eine gleichbleibende Behältnisqualität zu garantieren.

Bei einem weiteren bevorzugten Verfahren wird unter Berücksichtigung des Korrekturwerts wenigstens ein Zeitpunkt bestimmt, zu dem Ventile angesteuert werden und insbesondere zu dem das Ventil der Reduzierstation angesteuert wird und insbesondere wird ein Zeitpunkt bestimmt, zu dem die Ventile (und insbesondere das Ventil der Reduzierstation) zwischen einer Offenstellung und einer geschlossenen Stellung schaltet.

Dabei ist es möglich, dass ein bestimmter Zeitpunkt durch einen Benutzer oder eine Steuerung vorgegeben wird und dieser Zeitpunkt unter Berücksichtigung des besagten Korrekturwerts geändert wird. Insbesondere werden die Ventile (und insbesondere das Ventil der Reduzierstation) angesteuert, um von einem geschlossenen Zustand in einen geöffneten Zustand überzugehen oder um umgekehrt von einem geöffneten Zustand in einen geschlossenen Zustand überzugehen.

Bei einem weiteren bevorzugten Verfahren ist eine Vielzahl von Umformungsstationen zum Umformen von Kunststoffvorformlingen zu Kunststoffbehältnissen vorgesehen, wobei für jede dieser Umformungsstationen insbesondere mittels einer Messeinrichtung ein Ist-Druck bestimmt wird. Besonders bevorzugt weist jede dieser Umformungsstationen einen Ventilblock mit wenigstens einem steuerbaren Blasventil auf. Vorteilhaft wird jedes dieser Blasventile individuell unter Berücksichtigung des Ist-Drucks und/oder des Soll-Drucks gesteuert. Damit sind diese Ventile bevorzugt der jeweiligen Umformungsstation zugeordnet, wobei es sich bei dem oben genannten Ventil um ein der Reduzierstation zugeordnetes Ventil handelt.

Einem weiteren bevorzugten Verfahren werden die Umformungsstationen gemeinsam mittels eines Druckluftreservoirs, wie beispielsweise eines Ringkanals mit Druckluft versorgt. Besonders bevorzugt ist eine Vielzahl von Reservoirs und insbesondere eine Vielzahl von Ringkanälen vorgesehen, in denen unterschiedliche Druckstufen der Blasluft gespeichert werden können.

Bei einem weiteren vorteilhaften Verfahren werden die Kunststoffvorformlinge zu ihrer Expansion mit mehreren Druckstufen beaufschlagt, und bevorzugt wird bei wenigstens einer dieser Druckstufen der Ist-Druck ermittelt. Bevorzugt wird für mehreren der Druckstufen der Ist-Druck ermittelt. Besonders bevorzugt wird jeweils in Reaktion auf den ermittelten Ist-Druck nachgeregelt.

Bei einem bevorzugten Verfahren werden die Kunststoffvorformlinge aufeinanderfolgend mit mehreren Druckstufen beaufschlagt. Bevorzugt werden die Kunststoffvorformlinge mit wenigstens zwei bevorzugt mit wenigstens drei Druckstufen beaufschlagt. Besonders bevorzugt steigen die Drücke im Verlauf der Expansion der Kunststoffvorformlinge an.

Bei einem bevorzugten Verfahren werden die Kunststoffvorformlinge zunächst mit einem Vorblasdruck, (unmittelbar oder mittelbar) anschließend mit einem Zwischenblasdruck (der insbesondere höher ist als der Vorblasdruck) und schließlich mit einem Fertigblasdruck (der insbesondere höher ist als der Zwischenblasdruck) beaufschlagt. Daneben kann auch noch eine weitere Druckstufe zwischen dem Vorblasdruck und dem Fertigblasdruck vorgesehen sein.

Eine Druckmessung erfolgt bevorzugt wenigstens einmal und besonders bevorzugt wenigstens einmal während der Beaufschlagung in wenigstens zwei der Druckstufen und bevorzugt wenigstens einmal je Druckstufe.

Bei einem weiteren bevorzugten Verfahren ist das oben genannte Ventil, d.h. das der Reduzierstation zugeordnete Ventil ein Proportionalventil. Daneben wäre es auch denkbar, dass es sich bei einem oder mehreren der den Umformungsstationen zugeordneten Ventilen um Proportionalventile handelt.

Bei einem weiteren bevorzugten Verfahren wird über eine Druckluftquelle das unter Druck stehende fließfähige Medium zur Verfügung gestellt und besonders bevorzugt wird der von dieser Druckluftquelle stammende Druck von einer Reduzierstation reduziert, insbesondere bevorzugt die Druckluft in das Druckluftreservoir gelangt. Insbesondere handelt es sich bei der Reduzierstation um einen Domdruckregler. Besonders bevorzugt handelt es sich bei der Druckluftquelle um einen Kompressor, Kältetrockner und/oder Leitungsnetz oder auch einen Druckanschluss, der beispielsweise in einem Unternehmen vorhanden sein kann.

Bevorzugt wird (auch) das Ventil der Reduzierstation auf Basis des Ist-Drucks gesteuert.

Bei einem weiteren vorteilhaften Verfahren wird der Ist-Druck mittels einer Druckmesseinrichtung bestimmt, welche in einem Druckluftreservoir angeordnet ist. Alternativ oder zusätzlich wird der Ist-Druck mittels einer Vielzahl von Druckmesseinrichtungen bestimmt, welche jeweils den einzelnen Umformungsstationen zugeordnet sind.

Bei einem weiteren bevorzugten Verfahren wird der Ist-Druck kontinuierlich erfasst. Dies kann beispielsweise über eine vorgegebene Zeitspanne hinweg erfolgen oder auch bei den unterschiedlichen Druckstufen. Daneben kann auch für jede Umformungsstation eine Vielzahl von Druckaufnehmern vorgesehen sein. Diese können dabei einmalig oder auch kontinuierlich die Drücke erfassen.

Bei einem weiteren vorteilhaften Verfahren werden mittels einer (elektronischen) Speichereinrichtung Ist-Drücke, Soll-Drücke und/oder Korrekturwerte bevorzugt kontinuierlich erfasst. Diese Werte können dabei zur Steuerung der Ventile herangezogen werden. Wie oben erwähnt erfolgt dabei bevorzugt diese Speicherung mit einer Zuordnung zu der jeweiligen Umformungsstation.

Bei einem bevorzugten Verfahren werden permanent die jeweiligen Werte erfasst und besonders vorzugsweise auch gespeichert. Auf diese Weise kann ein Verhalten eines Ventils ermittelt werden und insbesondere vorbestimmt werden. Diese Vorgehensweise kann dabei auch für viele Maschinen bzw. maschinenübergreifend erfolgen. Bevorzugt handelt es sich bei der Speichereinrichtung um eine Cloud. Bevorzugt werden Daten über eine vollständige Lebenszeit einer Maschine hinweg ermittelt. Diese Daten können der Verwendung einer künstlichen Intelligenz (KI) verwendet werden, um beispielsweise einen bevorstehenden Ausfall eines Ventils zu prognostizieren.

Die vorliegende Erfindung ist weiterhin auf eine Vorrichtung zum Umformen von Kunststoffvorformlingen zu Kunststoffbehältnissen gerichtet. Diese weist eine Transporteinrichtung auf, welche die Kunststoffvorformlinge entlang eines vorgegebenen Transportpfads transportiert. Weiterhin weist die Vorrichtung eine Beaufschlagungseinrichtung, wie beispielsweise eine Blasdüse auf, welche die Kunststoffvorformlinge während dieses Transports mit einem fließfähigen und insbesondere gasförmigen Medium beaufschlagt, um sie zu expandieren.

Weiterhin weist die Vorrichtung ein steuerbares Ventil auf, welche die Beaufschlagung des Druckluftreservoirs mit dem fließfähigen Medium steuert, wobei ein Soll -Druck vorgegeben wird, mit dem das Druckluftreservoir beaufschlagt wird. Weiterhin berücksichtigt eine Steuerungseinrichtung diesen Soll-Druck bei der Steuerung des Ventils bzw. der Ventile.

Erfindungsgemäß weist die Vorrichtung wenigstens eine Messeinrichtung zu Ermittlung eines Ist-Drucks auf und eine Vergleichseinrichtung vergleicht diesen Ist-Druck mit dem Soll-Druck. Weiterhin ermittelt die Prozessoreinrichtung aus diesem Vergleich einen Korrekturwert, der bei der Steuerung des Ventils bzw. der Ventile berücksichtigt wird bzw. berücksichtigbar ist.

Es wird daher auch vorrichtungsseitig vorgeschlagen, dass Drücke bestimmt werden und mit Soll - Drücken verglichen werden und daraus Korrekturwerte ermittelt werden. Wie oben erwähnt, kann es sich bei dem Korrekturwert um einen zeitlichen Wert handeln.

Bevorzugt ist die Steuerungseinrichtung dazu geeignet und bestimmt, einen Zeitpunkt der Ansteuerung des Ventils der Reduzierstation unter Berücksichtigung des Korrekturwerts zu ändern. Bei dieser Ausgestaltung wird daher vorgeschlagen, dass ein Zeitpunkt, zu dem das Ventil geschalten wird, beispielsweise geöffnet wird, verändert wird insbesondere in Reaktion auf den Korrekturwert und damit auch in Reaktion auf den gemessenen Ist-Druck.

Bevorzugt weist die Vorrichtung eine Reduzierstation auf, welche dazu geeignet und bestimmt ist, einen von einer Druckquelle stammenden Druck zu reduzieren. Es ist dabei auch möglich, dass auch diese Reduzierstation von der Steuerungseinrichtung und/oder in Abhängigkeit von dem gemessenen Ist - Druck gesteuert wird. Bevorzugt ist das oben genannte Ventil ein Bestandteil dieser Reduzierstation.

Die Erfindung erlaubt einen Ausgleich einer (insbesondere längerfristigen) Veränderung von Regeltoleranzen durch beispielsweise den Verschleiß der Dichtungen. Diese braucht somit nicht mehr durch eine Veränderung des Flaschenrezeptes kompensiert zu werden. Verändert sich die Regeltoleranz kurzfristig, beispielsweise durch Ansteigen einer Hallentemperatur, wird dies ebenfalls durch die Steuerung selbstständig kompensiert. Auch ein Übertrag von Flaschenrezepten von einer Maschine auf die andere wird erleichtert, da die Abweichungen (Verhalten) der Maschinen untereinander automatisch angeglichen werden.

Der Bediener hat den Eindruck, dass nicht nur optisch gleiche Maschinen, sondern auch verfahrenstechnische gleiche Maschinen verwendet werden.

Des Weiteren könnte über eine intelligente Steuerung (KI) Rückschlüsse auf Lebensdauer, Verschleiß, Prozesssteuerung und dergleichen erzielt werden und eine mögliche Prozessanpassung vorgenommen werden, um diese Abweichungen bzw. Toleranzen auszugleichen.

Diese Idee kann bei jeder Behälterbehandlungsmaschine, d. h. sowohl bei Rundläufern als auch bei Taktmaschinen angewandt werden, in denen mittels Druckluftprozessschritte oder deren Funktionen ausgeführt werden.

Daneben steigt die Qualität der geblasenen Behältnisse und die Anzahl der fehlerhaften Behältnisse sinkt. Weiterhin kann die Materialverteilung wesentlich besser geregelt und/oder beeinflusst werden. Eine Veränderung des notwendigen Prozessdruckes, beispielsweise durch Verschleiß der Dichtungen, Flaschenplatzern und auch durch die Abnahme der notwendigen Luftmenge durch den Blasprozess wird automatisch ausgeglichen bzw. auf ein Minimum reduziert und/oder kompensiert.

Weitere Vorteile und Ausführungsformen ergeben sich aus der beigefügten Figur. Dabei zeigt:

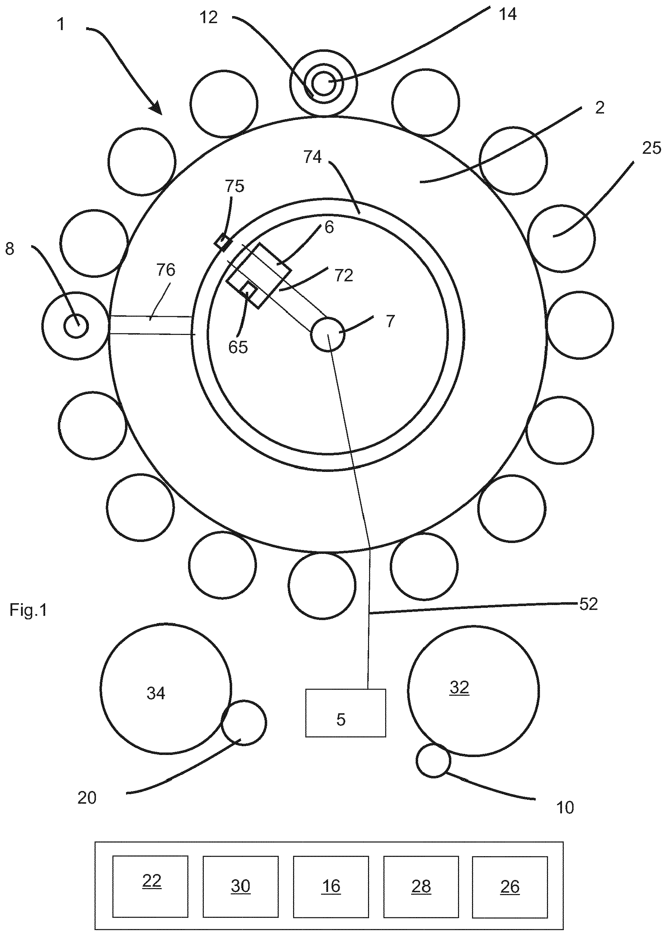

- Fig. 1: eine schematische Darstellung einer erfindungsgemäßen Vorrichtung.

Fig. 1 zeigt eine grob schematische Darstellung einer erfindungsgemäßen Vorrichtung 1 zum Umformen von Kunststoffvorformlingen 10 zu Kunststoffbehältnissen und insbesondere Kunststoffflaschen. Insbesondere handelt es sich bei der Vorrichtung um eine Streckblasmaschine. Das Bezugszeichen 2 kennzeichnet dabei eine Transporteinrichtung wie ein sog. Blasrad, an dem eine Vielzahl von Umformungsstationen 25 angeordnet sind. Diese Umformungsstationen sind dabei bevorzugt jeweils in der gleichen Art gestaltet bzw. weisen jeweils die gleichen Komponenten auf. Aus Gründen der Übersichtlichkeit ist dies jedoch nur an zwei Umformungsstationen dargestellt.

Das Bezugszeichen 32 kennzeichnet eine Zuführeinrichtung wie einen Transportstern welche der Umformungseinrichtung 1 Kunststoffvorformlinge 10 zuführt und das Bezugszeichen 34 kennzeichnet eine Abführeinrichtung, welche die geblasenen Kunststoffbehältnisse von der Umformungseinrichtung 1 abführt.

Das Bezugszeichen 5 kennzeichnet eine Druckluftquelle wie etwa einen Kompressor, welcher Druckluft zur Verfügung stellt und über eine Leitung 52 der Vorrichtung zuführt. Das Bezugszeichen 7 kennzeichnet einen Drehverteiler, der die zugeführte Druckluft letztlich auf die einzelnen Umformungsstationen 25 verteilt.

Das Bezugszeichen 72 kennzeichnet eine Verbindungsleitung, welche ein Druckluftreservoir wie einen Ringkanal 74 mit dem Drehverteiler verbindet. Bevorzugt weist die Vorrichtung wenigstens zwei, bevorzugt wenigstens drei derartige Ringkanäle auf. Das Bezugszeichen 6 kennzeichnet eine Reduzierstation wie einen Domdruckregler, der den von der Druckluftquelle 5 stammenden Druck reduziert. Das Bezugszeichen 65 kennzeichnet ein Ventil dieser Reduzierstation. Dieses Ventil wird bevorzugt bei dem erfindungsgemäßen Verfahren gesteuert.

Die Umformungsstationen weisen jeweils eine Beaufschlagungseinrichtung 14, wie eine Blasdüse auf, welche die Kunststoffvorformlinge mit der Druckluft beaufschlagt. Das Bezugszeichen 12 kennzeichnet schematisch ein Ventil, welches die Druckluftzufuhr zu dem Kunststoffvorformling 10 steuert.

Das Bezugszeichen 8 kennzeichnet grob schematisch eine (optional vorhandene) Messeinrichtung, genauer eine Druckerfassungseinrichtung, welche den Ist-(Luft)Druck (insbesondere innerhalb der zu expandierenden Behältnisse) erfasst. Das Bezugszeichen 75 kennzeichnet eine Druckmesseinrichtung, welche dem Ringkanal 74 zugeordnet ist und welche den Druck des fließfähigen Mediums innerhalb des Ringkanals 74 bestimmt.

Mittels einer Eingabeeinrichtung 28 kann ein Benutzer der Maschine einen Soll-Druck vorgeben. Eine Vergleichseinrichtung 22 vergleicht den gemessenen Ist-Druck (bevorzugt getrennt und zuordenbar für jede Umformungsstation mit dem Soll-Druck und ermittelt bevorzugt eine Differenz zwischen diesen Drücken.

Eine Prozessoreinrichtung 30 ermittelt aus dieser Differenz einen Korrekturwert, der von einer Steuerungseinrichtung 16 verwendet wird, um die einzelnen Ventile der Umformungsstationen anzusteuern.

Bevorzugt ist weiterhin eine Speichereinrichtung 26 vorgesehen, welche -bevorzugt für jede einzelne Umformungsstation - jeweils die gemessenen Drücke speichert, bevorzugt mit einer Zuordnung zu den jeweiligen Umformungsstationen und bevorzugt auch mit einem Zeitwert.

Das Bezugszeichen 6 kennzeichnet (grob schematisch) Reduzierstation wie einen Domdruckregler, der den von der Druckluftquelle 5 stammenden Luftdruck reduziert.

## Patentansprüche

1. Verfahren zum Umformen von Kunststoffvorformlingen zu Kunststoffbehältnissen (20), wobei die Kunststoffvorformlinge (10) entlang eines vorgegebenen Transportpfads transportiert werden und während dieses Transports mit einem fließfähigen Medium beaufschlagt und expandiert werden, wobei ein steuerbares Ventil (65) einer Reduzierstation (6) die Beaufschlagung eines Druckluftreservoirs (74), insbesondere eines Ringkanals mit dem fließfähigen Medium steuert und wobei ein Soll-Druck vorgegeben wird, mit dem das Druckluftreservoir (74) beaufschlagt wird, wobei dieser Soll-Druck bei der Steuerung des Ventils (65) der Reduzierstation (6) berücksichtigt wird,
**dadurch gekennzeichnet, dass**
ein Ist-Druck ermittelt wird und dieser Ist-Druck mit dem Solldruck verglichen wird und aus diesem Vergleich ein Korrekturwert ermittelt wird, der bei der Steuerung des Ventils (65) berücksichtigt und/oder verwendet wird.

2. Verfahren nach Anspruch 1,
**dadurch gekennzeichnet, dass**
der Korrekturwert sich aus einer Differenz zwischen dem Ist-Druck und dem Soll-Druck ergibt.

3. Verfahren nach wenigstens einem der vorangegangenen Ansprüche,
**dadurch gekennzeichnet, dass**
unter Berücksichtigung des Korrekturwerts ein Zeitpunkt bestimmt wird, zu dem das Ventil (65) der Reduzierstation (6) angesteuert wird und insbesondere ein Zeitpunkt bestimmt wird, zu dem das Ventil (65) der Reduzierstation (6) zwischen einer OffenStellung und einer Geschlossen-Stellung schaltet.

4. Verfahren nach wenigstens einem der vorangegangenen Ansprüche,
**dadurch gekennzeichnet, dass**
eine Vielzahl von Umformungsstationen zum Umformen von Kunststoffvorformlingen vorgesehen ist und für jede dieser Umformungsstationen ein Ist-Druck bestimmt wird.

5. Verfahren nach wenigstens einem der vorangegangenen Ansprüche,
**dadurch gekennzeichnet, dass**
die Kunststoffvorformlinge zur Expansion mit mehreren Druckstufen beaufschlagt werden und bevorzugt für wenigstens eine dieser Druckstufen der Ist-Druck ermittelt wird.

6. Verfahren nach wenigstens einem der vorangegangenen Ansprüche,
**dadurch gekennzeichnet, dass**
das Ventil (65) der Reduzierstation ein Proportionalventil ist.

7. Verfahren nach wenigstens einem der vorangegangenen Ansprüche,
**dadurch gekennzeichnet, dass**
über eine Druckluftquelle das unter Druck stehende fließfähige Medium zur Verfügung gestellt wird und bevorzugt der von dieser Druckluftquelle stammende Druck von einer Reduzierstation (6) reduziert wird bevor die Druckluft in das Druckluftreservoir (74) gelangt.

8. Verfahren nach wenigstens einem der vorangegangenen Ansprüche,
**dadurch gekennzeichnet, dass**
der Ist-Druck mittels wenigstens einer Druckmesseinrichtung, welche in einem Druckluftreservoir angeordnet ist und/oder mittels einer Vielzahl von Druckmesseinrichtungen, welche einzelnen Umformungsstationen zugeordnet sind, bestimmt wird.

9. Verfahren nach wenigstens einem der vorangegangenen Ansprüche,
**dadurch gekennzeichnet, dass**
der Ist-Druck kontinuierlich erfasst wird.

10. Verfahren nach wenigstens einem der vorangegangenen Ansprüche,
**dadurch gekennzeichnet, dass**
mittels einer Speichereinrichtung Ist-Drücke, Soll-Drücke und oder Korrekturwerte bevorzugt kontinuierlich erfasst werden.

11. Verfahren nach wenigstens einem der vorangegangenen Ansprüche,
**dadurch gekennzeichnet, dass**
zur Ermittlung von Kennwerten der Vorrichtung eine künstliche Intelligenz verwendet wird.

12. Vorrichtung zum Umformen von Kunststoffvorformlingen (10) zu Kunststoffbehältnissen (20), mit einer Transporteinrichtung (2), welche die Kunststoffvorformlinge (10) entlang eines vorgegebenen Transportpfads transportiert und einer Beaufschlagungseinrichtung (14), welche die Kunststoffvorformlinge (10) während dieses Transports mit einem fließfähigen Medium beaufschlagt um sie zu expandieren, wobei die Vorrichtung ein steuerbares Ventil (65) aufweist welches die Beaufschlagung eines Druckluftreservoirs, insbesondere eines Ringkanals mit dem fließfähigen Medium steuert und wobei ein Solldruck vorgebbar ist, mit dem das Druckluftreservoir (74) beaufschlagt wird, wobei eine Steuerungseinrichtung (16) diesen Sollwert bei der Steuerung dieses Ventils (65) berücksichtigt,
**dadurch gekennzeichnet, dass**
die Vorrichtung eine Messeinrichtung (8) zur Ermittlung eines Ist-Drucks aufweist und eine Vergleichseinrichtung (22) diesen Ist-Druck mit dem Soll-Druck vergleicht und eine Prozessoreinrichtung (30) aus diesem Vergleich einen Korrekturwert ermittelt, der bei der Steuerung des Ventils (65) berücksichtigt wird.

13. Vorrichtung nach dem vorangegangenen Anspruch,
**dadurch gekennzeichnet, dass**
die Steuerungseinrichtung (16) dazu geeignet und bestimmt ist, einen Zeitpunkt der Ansteuerung des Ventils (65) der Reduzierstation (6) unter Berücksichtigung des Korrekturwerts zu ändern.

14. Vorrichtung nach wenigstens einem der vorangegangenen Ansprüche,
**dadurch gekennzeichnet, dass**
die Vorrichtung eine Reduzierstation (6) aufweist, welche dazu geeignet und bestimmt ist, einen von einer Druckquelle stammenden Druck zu reduzieren und das Ventil (65) bevorzugt ein Bestandteil dieser Reduzierstation (6) ist.

## Claims

1. Method for forming plastic preforms (10) into plastic containers (20), wherein the plastic preforms (10) being transported along a predetermined transport path and being applied and expanded by a flowable medium during this transport, wherein a controllable valve (65) of a reducing station (6) controlling the application with the flowable medium of a compressed-air reservoir (74), in particular an annular channel, and wherein a target pressure being predetermined, with which the compressed-air reservoir (74) is applied, wherein this target pressure being taken into account in the control of the valve (65) of the reducing station (6),
**characterised in that**
an actual pressure is determined and this actual pressure is compared with the target pressure and, from this comparison, a correction value is determined which is taken into account and/or used in the control of the valve (65).

2. Method according to claim 1,
**characterised in that**
the correction value results from a difference between the actual pressure and the target pressure.

3. Method according to at least one of the preceding claims,
**characterised in that**,
taking into account the correction value, a time is determined at which the valve (65) of the reducing station (6) is actuated and, in particular, a time is determined at which the valve (65) of the reducing station (6) switches between an open position and a closed position.

4. Method according to at least one of the preceding claims,
**characterised in that**
a plurality of forming stations is provided for forming plastic preforms and an actual pressure is determined for each of these forming stations.

5. Method according to at least one of the preceding claims,
**characterised in that**
the plastic preforms are applied with several pressure stages for expansion and preferably the actual pressure is determined for at least one of these pressure stages.

6. Method according to at least one of the preceding claims,
**characterised in that**
the valve (65) of the reducing station is a proportional valve.

7. Method according to at least one of the preceding claims,
**characterised in that**
the pressurised flowable medium is made available via a source of compressed air and preferably the pressure originating from this source of compressed air is reduced by a reducing station (6) before the compressed air enters the compressed air reservoir (74).

8. Method according to at least one of the preceding claims,
**characterised in that**
the actual pressure is determined by means of at least one pressure measuring device which is arranged in a compressed air reservoir and/or by a plurality of pressure measuring devices which are assigned to individual forming stations.

9. Method according to at least one of the preceding claims,
**characterised in that**
the actual pressure is continuously detected.

10. Method according to at least one of the preceding claims,
**characterised in that**
the actual pressures, target pressures and/or correction values are preferably continuously recorded by a storage device.

11. Method according to at least one of the preceding claims,
**characterised in that**
an artificial intelligence is used to determine characteristic values of the device.

12. Apparatus for forming plastic preforms (10) into plastic containers (20), comprising a transport device (2) which transports the plastic preforms (10) along a predetermined transport path and an application device (14) which applies the plastic preforms (10) during this transport with a flowable medium in order to expand them, wherein the apparatus having a controllable valve (65) which controls the application of the flowable medium to a compressed-air reservoir, in particular an annular channel, and wherein a target pressure being predeterminable with which the compressed-air reservoir (74) is applied, wherein a control device (16) taking account of this target value in the control of this valve (65),
**characterised in that**
the device has a measuring device (8) for determining an actual pressure, and a comparison device (22) compares this actual pressure with the target pressure, and a processor device (30) determines a correction value from this comparison which is taken into account in the control of the valve (65).

13. Apparatus according to the preceding claim,
**characterised in that**
the control device (16) is suitable and intended to change a timing of the actuation of the valve (65) of the reducing station (6) taking into account the correction value.

14. Apparatus according to at least one of the preceding claims,
**characterised in that**
the apparatus comprises a reducing station (6) which is suitable and intended for reducing a pressure originating from a pressure source and the valve (65) is preferably a component of this reducing station (6).

## Revendications

1. Procédé de façonnage de préformes en matière plastique en des récipients en matière plastique (20), dans lequel les préformes en matière plastique (10) sont transportées le long d'une voie de transport prédéfinie et sont exposées à l'action d'un milieu pouvant s'écouler pendant ledit transport et sont expansées, dans lequel une soupape (65) pouvant être commandée d'une station de réduction (6) commande l'exposition d'un réservoir d'air comprimé (74), en particulier d'un canal annulaire, à l'action du milieu pouvant s'écouler et dans lequel une pression théorique est prédéfinie, à laquelle le réservoir d'air comprimé (74) est exposé, dans lequel ladite pression théorique est prise en compte lors de la commande de la soupape (65) de la station de réduction (6),
**caractérisé en ce que**
une pression réelle est déterminée et ladite pression réelle est comparée à la pression théorique et une valeur de correction est déterminée à partir de cette comparaison, laquelle est prise en compte et/ou est utilisée lors de la commande de la soupape (65).

2. Procédé selon la revendication 1,
**caractérisé en ce que**
la valeur de correction résulte d'une différence entre la pression réelle et la pression théorique.

3. Procédé selon au moins l'une quelconque des revendications précédentes,
**caractérisé en ce que**
est défini en prenant en compte la valeur de correction un moment, auquel la soupape (65) de la station de réduction (6) est pilotée, et est défini en particulier un moment, auquel la soupape (65) de la station de réduction (6) passe entre une position ouverte et une position fermée.

4. Procédé selon au moins l'une quelconque des revendications précédentes,
**caractérisé en ce que**
une pluralité de stations de façonnage est prévue pour façonner des préformes en matière plastique et une pression réelle est définie pour chacune desdites stations de façonnage.

5. Procédé selon au moins l'une quelconque des revendications précédentes,
**caractérisé en ce que**
les préformes en matière plastique sont exposées à plusieurs niveaux de pression pour l'expansion et la pression réelle est déterminée de manière préférée pour au moins un desdits niveaux de pression.

6. Procédé selon au moins l'une quelconque des revendications précédentes,
**caractérisé en ce que**
la soupape (65) de la station de réduction est une soupape proportionnelle.

7. Procédé selon au moins l'une quelconque des revendications précédentes,
**caractérisé en ce que**
le milieu pouvant s'écouler sous pression est mis à disposition par l'intermédiaire d'une source d'air comprimé, et la pression provenant de ladite source d'air comprimé est réduite de manière préférée par une station de réduction (6) avant que l'air comprimé ne parvienne dans le réservoir d'air comprimé (74).

8. Procédé selon au moins l'une quelconque des revendications précédentes,
**caractérisé en ce que**
la pression réelle est définie au moyen d'au moins un système de mesure de pression, lequel est disposé dans un réservoir d'air comprimé, et/ou au moyen d'une pluralité de systèmes de mesure de pression, lesquels sont associés à diverses stations de façonnage.

9. Procédé selon au moins l'une quelconque des revendications précédentes,
**caractérisé en ce que**
la pression réelle est détectée en continu.

10. Procédé selon au moins l'une quelconque des revendications précédentes,
**caractérisé en ce que**
des pressions réelles, des pressions théoriques et/ou des valeurs de correction sont détectées de manière préférée en continu au moyen d'un système de stockage.

11. Procédé selon au moins l'une quelconque des revendications précédentes,
**caractérisé en ce que**
une intelligence artificielle est utilisée pour déterminer des valeurs caractéristiques du dispositif.

12. Dispositif de façonnage de préformes en matière plastique (10) en des récipients en matière plastique (20), avec un système de transport (2), lequel transporte les préformes en matière plastique (10) le long d'une voie de transport prédéfinie, et avec un système de sollicitation (14), lequel expose les préformes en matière plastique (10) à l'action d'un milieu pouvant s'écouler pendant ledit transport pour les expanser, dans lequel le dispositif présente une soupape (65) pouvant être commandée, laquelle commande l'exposition d'un réservoir d'air comprimé, en particulier d'un canal annulaire, à l'action du milieu pouvant s'écouler et dans lequel une pression théorique peut être prédéfinie, à laquelle le réservoir d'air comprimé (74) est exposé, dans lequel un système de commande (16) prend en compte ladite valeur théorique lors de la commande de ladite soupape (65),
**caractérisé en ce que**
le dispositif présente un système de mesure (8) destiné à déterminer une pression réelle et un système de comparaison (22), compare ladite pression réelle à la pression théorique et un système de processeur (30) détermine à partir de ladite comparaison une valeur de correction, qui est prise en compte lors de la commande de la soupape (65).

13. Dispositif selon la revendication précédente,
**caractérisé en ce que**
le système de commande (16) est adapté pour et se destine à modifier un moment du pilotage de la soupape (65) de la station de réduction (6) en prenant en compte la valeur de correction.

14. Dispositif selon au moins l'une quelconque des revendications précédentes,
**caractérisé en ce que**
le dispositif présente une station de réduction (6), laquelle est adaptée pour et se destine à réduire une pression provenant d'une source de pression et la soupape (65) fait de manière préférée partie intégrante de ladite station de réduction (6).
